# EUROPEAN PATENT SPECIFICATION

(11) **EP 4 220 340 B1**
(45) Date of publication and mention of the grant of the patent: **26.03.2025**
(21) Application number: 22208294.3
(22) Date of filing: 18.11.2022
(51) Int. Cl.: G06F 1/16

(54) **HINGE MECHANISM FOR ELECTRONIC DEVICE**
SCHARNIERMECHANISMUS FÜR ELEKTRONISCHE VORRICHTUNG
MÉCANISME DE CHARNIÈRE POUR DISPOSITIF ÉLECTRONIQUE

(30) Priority: 28.01.2022 US 202217587976
(43) Date of publication of application: 02.08.2023
(73) Proprietor: INTEL Corporation, Santa Clara, CA 95054 (US)
(72) Inventor: GHOSH, Prosenjit, Portland, OR 97229 (US); MATSUMURA, Naoki, San Jose, CA 95118 (US); LARSEN, Denica N., Portland, OR 97231 (US); MASLOV, Jordan E., Portland, OR 97210 (US); LEE, Ming-Chia, TW 221 New Taipei City (TW); CHEN, Peiwang, Shenzhen, 518008 (CN)
(74) Representative: HGF

(56) References cited:
- US-A1- 2018 364 767
- US-A1- 2020 278 724
- US-A1- 2021 096 607

## Description

### Field

Embodiments of the present invention relate generally to the technical field of electronic devices, and more particularly to hinge mechanism of an electronic device.

### Background

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure. Unless otherwise indicated herein, the approaches described in this section are not prior art to the claims in the present disclosure and are not admitted to be prior art by inclusion in this section.

Foldable electronic devices such as foldable organic light omitting diode (FOLED) or a dual display system may include at least two panels that are coupled by a hinge mechanism. In these devices, it may be desirable to place electrically coupled components on either side of the hinge.

US 2018/364767 describes a hinge connector including, a hinge that includes a rotation shaft and a support cylinder rotatably supporting the rotation shaft, a cable that is wound on an outer periphery of the hinge, and a spring that biases one end side of the cable in a longitudinal direction thereof toward a side away from the hinge along a direction perpendicular to an axial direction of the hinge.

US 2020/278724 describes an electronic device comprising: a body portion comprising a first surface facing in a first direction, a second surface facing in a second direction that is opposite to the first direction, and a seating groove arranged in an inner peripheral area thereof in the longitudinal direction; a display portion rotatably coupled to the body portion; and a connector module arranged in the seating groove of the body portion so as to provide electric coupling between the body portion and the display portion, at least a part of the connector module being configured to rotate. The connector module may comprise: a support portion fixed/coupled inside the seating groove, the support portion comprising an opening arranged therein; a link portion rotatably coupled to the support portion, the center area of the link portion being open so as to correspond to the opening of the support portion; at least one elastic member arranged between the support portion and the link portion so as to provide elastic restoration power caused by rotation of the link portion; and at least one cable connected from the body portion to the display portion through the opening of the link portion, the cable being folded or unfolded by rotation of the link portion.

US 2021/096607 describes a portable information handling system housing that rotationally couples first and second housing portions with a hinge assembly having first and second axles held in a parallel fixed lateral disposition by interaction of a gear chassis, a drive carriage and an idler assembly. The first and second axles expand to increase the distance between the first and second housing portions in the event that the housing portions close over an object disposed between them. The idler assembly couples to the gear chassis and drive carriage to rotate with the second axle as it moves relative to the first axle.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 illustrates a simplified block diagram of an example foldable electronic device, in accordance with various embodiments.
Figure 2 illustrates an example of a hinge mechanism with one or more tensioning mechanisms, in accordance with various embodiments.
Figure 3 illustrates an alternative example of a hinge mechanism with one or more tensioning mechanisms, in accordance with various embodiments.
Figures 4a and 4b (collectively, "Figure 4") illustrate example electrical connectors that may be used in the example foldable electronic device of Figure 1, in accordance with various embodiments.
Figure 5 illustrates an example connecting structure that may be used with one or more of the embodiments of Figure 4, in accordance with various embodiments.
Figure 6 illustrates an example system configured to employ the apparatuses and methods described herein, in accordance with various embodiments.

### Detailed Description

In the following detailed description, reference is made to the accompanying drawings that form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

The description may use perspective-based descriptions such as top/bottom, in/out, over/under, and the like. Such descriptions are merely used to facilitate the discussion and are not intended to restrict the application of embodiments described herein to any particular orientation.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

As previously noted, in electronic devices such as a dual display system, or a FOLED display, two panels of the electronic device may be coupled by hinge mechanism. Two system components, for example a battery pack and a motherboard, or two displays, may be placed on each of the panels. It may be desirable for the two element to be electrically coupled. Hence, an electronic connector may be used to connect the two components. Such a connector may pass through the hinge mechanism.

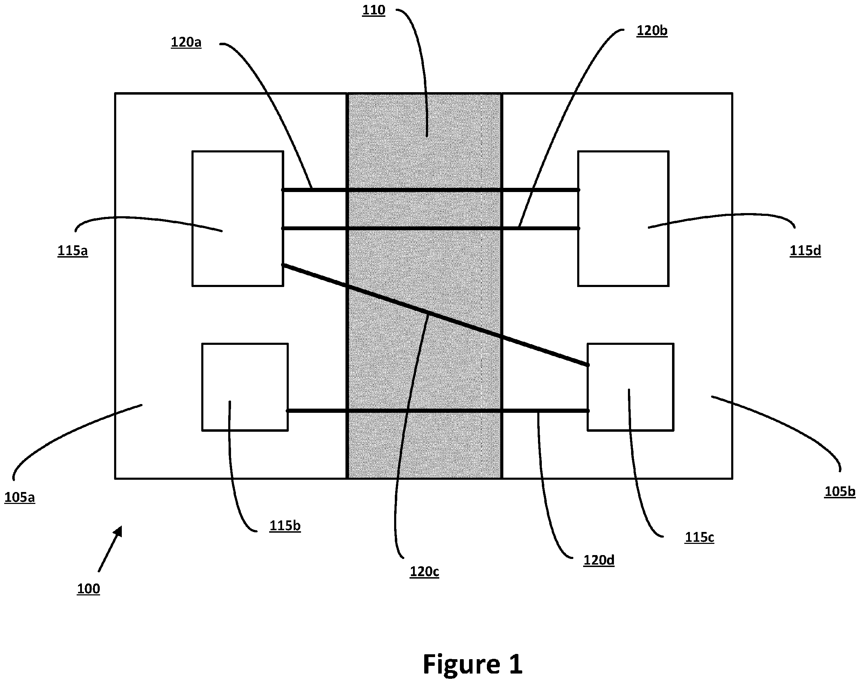

Figure 1 illustrates a simplified block diagram of an example foldable electronic device 100, in accordance with various embodiments. The electronic device 100 includes two panels 105a and 105b (collectively, "panels 105") coupled by a hinge mechanism 110. The hinge mechanism 110 may be operable to allow the panels 105 to fold around the hinge mechanism such that panel 105a may be facing panel 105b when the electronic device 100 is in a "closed" position. As shown in Figure 1, the electronic device 100 may be considered to be in an "open" position.

In descriptions herein, the open or closed position may be referred to with respect to the hinge mechanism 110 being in the open or closed position. Additionally or alternatively, the open or closed position may be referred to with respect to the panels 105 being in the open or closed position. Additionally or alternatively, the open or closed position may be referred to with respect to the electronic device 100 being in the open or closed positions. Generally, as used herein, the concepts and specific terminology are interchangeable (e.g., the open position of the electronic device 100 is the same as the open position of the hinge mechanism 110, which is the same as the open position of the panels 105. The closed position may have similar correspondences).

Respective ones of the panels include different components such as components 115a, 115b, 115c, and 115d (collectively, "components 115"). The components 115 may be components such as a display, a battery pack, different cells of a battery pack, a circuit board (e.g., a motherboard), a memory, an antenna, radio frequency (RF) circuitry, baseband circuitry, graphics processing circuitry, a processor, or some other type of circuitry, logic, or some physical element of an electronic device 100. As may be seen in Figure 1, various of the components 115 may be coupled by one or more connectors such as connectors 120a, 120b, 120c, and 120d (collectively, "connectors 120"). As may be seen, some of the components may be coupled to only one other component by a single connector (e.g., components 115b and 115c that are coupled by connector 120d). Some components may be coupled to two other components (e.g., components 115a and 115c). Some components may be coupled to another component by more than one connector (e.g., components 115a and 115d coupled by connectors 120a and 120b).

It will be understood that the example electronic device 100 of Figure 1 is intended as a highly simplified example block diagram for the purpose of illustrating and/or discussing concepts herein. The number, configuration, size, or relative proportions of the various elements of Figure 1 such as the connectors 120, the components 115, the panels 105, or the hinge mechanism 110 may be different in different embodiments. For example, in some embodiments more or fewer components 115 may be present, and may be coupled by more or fewer connectors 120 than shown. Additionally, in some embodiments more or fewer panels may be arranged in a different configuration than shown, or coupled by more or fewer hinge mechanisms than shown.

In some legacy embodiments, the connectors would be made of or include flexible printed circuits (FPC). As used herein, an FPC may refer to a flexible structure that includes one or more metal traces (e.g., copper traces or some other conductive material) that are part of or otherwise coupled with a flexible dielectric material such as polyimide. Such a structure may have a ribbon-like form factor, and allow for a flexible electrical coupling between elements of different panels of the electronic device with multiple data pathways. In legacy devices, the FPC may have been designed with sufficient width to provide the necessary amount of metal traces for the bandwidth indicated in the particular use case.

In legacy embodiments, slack length of the FPC (e.g., extra length of the FPC between the two electronic components to which the FPC is coupled) may have been included to accommodate FPC length change between when the electronic device is closed or opened. However, tight bend radii, as may be present in relatively thing hinge mechanisms, may have inherently high risk of power trace damage due to pinching, pulling, or dragging along an edge of a structure such as the panel.

Moreover, when the electronic device is relatively thin or small, and hence space constrained (as may be present, e.g., in a mobile device such as a cellular phone or a personal digital assistant (PDA), there may not be enough space to allow for a FPC to pass through openings of the hinge and still maintain a sufficient width and/or bandwidth for the FPC. In addition to bandwidth limitations, a relatively narrow FPC may be broken after repeated bending due to material brittleness. Finally, a relatively narrow FPC may increase impedance in the communication path, thereby causing increased energy dissipation and reduced battery life.

If wire is used in place of the FPC in narrow-FPC applications, the increased impedance introduced by the FPC may be decreased, but redundant wire length (e.g., slack length) may still be necessary. In legacy hinge mechanisms, the wire may experience the same structural damage due to pinching, pulling, or dragging as described above. Also, the electrical connections between a wire and components such as components 115 may be thicker than the electrical connections between an FPC and a component, which may increase the thickness of the overall electronic device. Such an increase may be undesirable in applications where it is desirable for the electronic device to be relatively small (e.g., a pocket-sized cellular telephone or a similar device).

Embodiments herein may overcome one or more of the above-described issues. Specifically, embodiments herein provide a hinge mechanism and related structure that allows for connection of components of an electronic device through the hinge mechanism, while still providing a relatively small/thin system with improved bending counts (e.g., an improved ability to repeatedly fold or unfold the electronic device without structural damage to the connectors) while maintaining reduced impedance in the power delivery path.

Specifically, embodiments herein include connectors such as connectors 120 that include a wire coupled with FPCs. The wire is routed through a hinge mechanism that includes one or more tensioning mechanisms to provide tension that may assist with managing and/or controlling the redundant length of the wire within the hinge mechanism. Beyond the hinge mechanism, the wire couples with an FPC that is electrically positioned between the wire and a component such as component 115. At the connection between the wire and the FPC, the wires are physically positioned between the FPC and a stiffener, which may improve mechanical stability of the coupling.

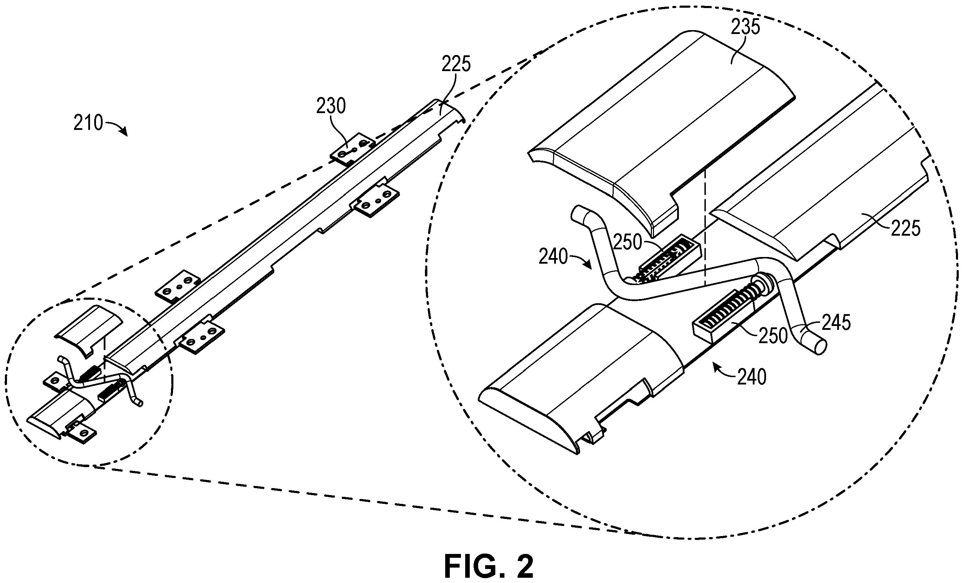

Figure 2 illustrates an example of a hinge mechanism 210 with one or more tensioning mechanisms, in accordance with various embodiments. Specifically, the hinge mechanism 210 may be similar to hinge mechanism 110 described above. The hinge mechanism 210 may include a hinge body 225, which may provide structural support for the hinge mechanism 210. The hinge mechanism 210 may further include one or more hinge couplers 230 that are coupled with the hinge body 225. The hinge couplers 230 may couple with, for example, one of panels 105 and allow movement of one of the panels 105 with respect to the hinge mechanism 210 or another of the panels 105. Such movement may allow for opening or closing of the electronic device 100 as described above.

As shown by the blown-up portion of Figure 2, the hinge body 225 may include two openings 240 through which a wire 245 may be routed. The wire 245 may be a wire of a connector such as one of connectors 120 described above. In some embodiments, the wire 245 may be a coaxial wire, a standard electrical wire (e.g., a wire formed of a conductive material such as copper surround by a dielectric shielding), or some other type of wire. For example, in embodiments where the wire 245 is intended to couple a battery to another component of the electronic device, the wire 245 may be a standard electrical wire. In embodiments where the wire 245 is intended to provide decreased electro-magnetic interference (EMI) or increased signal integrity, a coaxial wire may be used. In some embodiments, the wire 245 may be a wire bundle. That is, the wire 245 may be physically implemented as a plurality of discrete wires that are routed through the hinge body 225 together. In some embodiments, the wires of a wire bundle may be part of a single physical unit (e.g., encased in a dielectric housing). In some embodiments, the wires of the wire bundle may be fastened together through some external fastener (e.g., the dielectric sheathing of the various wires may be glued or otherwise adhered together). In some embodiments, the wires of the wire bundle may not be adhered or otherwise coupled together. Generally, it will be understood that the discussion of embodiments herein may focus on a singular "wire," however the embodiments may be equally applicable to implementations that include one or more wire bundles rather than a singular wire. Other embodiments may include other variations.

The hinge mechanism 210 may further include two tensioning mechanisms 250 provided within the hinge body at a location through which the wire 245 passes. In the embodiment of Figure 2, the tensioning mechanisms 250 may be spring-loaded tensioners. That is, the tensioning mechanisms 250 may include a spring and a solid element coupled with the spring, although such an embodiment is only one example embodiment and other embodiments may include alternative spring-loaded tensioning mechanisms.

As can be seen in Figure 2, the wire 245 may include slack length. When the electronic device 100 is open, the tensioning mechanisms 250 may push the slack length of the wire such that the wire 245 has a generally zig-zag pattern inside of the hinge body 225. This configuration is shown in Figure 2. However, it will be understood that when the electronic device 100 is closed, then the wire 245 may be pulled tighter. This may cause the wire 245 to push against the tensioning mechanisms 250, thereby compressing the springs. In this configuration, the wire 245 may have a considerably less pronounced zig-zag type pattern.

In this way, the slack length of the wire 245 may be controlled to prevent crimping or bunching of the wire inside of the hinge body 225, which could lead to the mechanical failures described above. Additionally, the part of the hinge body 225 over which the wire 245 physically passes may be smoothed in some way such that the hinge body 225 does not "rub" or otherwise damage the wire 245 as the wire 245 moves. As a result, the overall mechanical life of the wire 245 within the hinge mechanism 210 may be significantly increased.

In some embodiments, as shown, the hinge mechanism 210 may include a hinge cover 235 that allows access to the cavity in which the tensioning mechanisms 250 and the wire 245 are positioned. In some embodiments, the hinge cover 235 may be removable such that the cavity is accessible, for example for repair. In some embodiments, the hinge cover 235 may not be removable (e.g., soldered to the hinge body 225) and may exist to provide for access to the cavity during construction of the hinge mechanism 210. In some embodiments, the hinge mechanism 210 may be unitary structure within a separate hinge cover 235. In some embodiments, the hinge cover 235 may have a different shape than depicted.

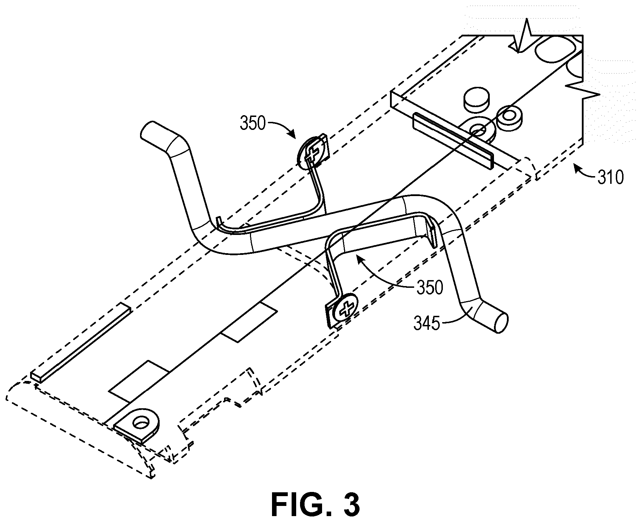

Figure 3 illustrates an alternative example of a hinge mechanism 310 with one or more tensioning mechanisms, in accordance with various embodiments. It will be noted that various elements of the hinge mechanism 310 (e.g., the hinge body, the openings, etc.) are generally similar to those of hinge mechanism 210, and as such are not re-numbered herein for the sake of lack of redundancy.

A wire 345, which may be similar to wire 245, passes through the hinge mechanism 310. The hinge mechanism includes tensioning mechanisms 350. The tensioning mechanisms 350 may, in this embodiment, be leaf springs rather than spring-loaded tensioners. Specifically, the tensioning mechanisms 350 may be formed of an elastic metal plate rather than a spring-loaded tensioner. The tensioning mechanisms 350 may operate similar to the tensioning mechanisms 250 of Figure 2. As the electronic device 100 is closed, the wire 345 may be pulled taut and compress the tensioning mechanisms 350. When the electronic device 100 is opened, the wire 345 may be less taut and the tensioning mechanisms 350 may push against the slack length of the wire 345 to form the depicted zig-zag type pattern.

It will be understood that the above-depicted embodiments are intended as examples of some embodiments herein for the sake of discussion, and other embodiments may vary. For example, in some embodiments, more, fewer, or different tensioning mechanisms may be used. A change in the number of configuration of the tensioning mechanisms may change the resultant pattern of the wire. Such a change may be based on, for example, the amount of slack length of the wire needed for fully opening or closing the electronic device, the type of wire used, space constraints of the hinge mechanism, etc. In some embodiments, a different type of tensioning mechanism may be used, or a combination of different tensioning mechanisms may be used (e.g., a spring-loaded tensioner and a leaf spring in the same hinge mechanism).

In some embodiments, more than one wire may pass through the hinge mechanism. In these embodiments, two or more wires may pass through the same openings such as openings 240. The two or more wires may be tensioned by the same tensioning mechanisms or different tensioning mechanisms. If different tensioning mechanisms are used, then the different tensioning mechanisms may be of the same type or different types from one another. In some embodiments, the hinge mechanism may include a plurality of openings with wires passing through the hinge mechanism therein. In these embodiments, respective ones of the cavities defined by the openings may have tensioning mechanisms therein which may be of the same type or different types from one another.

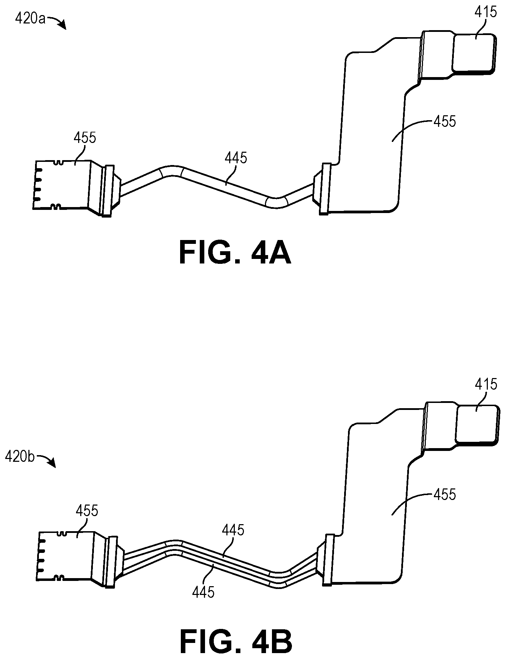

As noted, in embodiments a wire such as wires 245 or 345 is coupled with a component such as a battery, a display, or other type of electrical component as described with respect to components 115 via an FPC. In other words, a connector such as connectors 120 may include a wire with an FPC physically and electrically coupled between the wire and a component on one or both sides of the wire. The use of the FPC within the panel 105 of the electronic device may allow the panels 105 to maintain a low profile at the connectors. Figures 4a and 4b (collectively, "Figure 4") illustrate example electrical connectors that may be used in the example foldable electronic device of Figure 1, in accordance with various embodiments.

Specifically, Figure 4a depicts a connector 420a, which may be similar to one of connectors 120. The connector may include a wire 445, which may be similar to one of wires 245 or 445. The wire 445 is coupled with FPCs 455 at either side of the wire. One of the FPCs may include a coupling 415, which may be used to couple with a component such as one of components 115.

In some embodiments, to further increase the wire flexibility and reduce overall thickness (e.g., in the case where the wire 445 includes a plurality of wires in a single wire bundle), or to adjust the wire gauge for higher power ratings, a connector may include two or more wires and/or two or more wire bundles. Such a configuration is shown in connector 420b of Figure 4b.

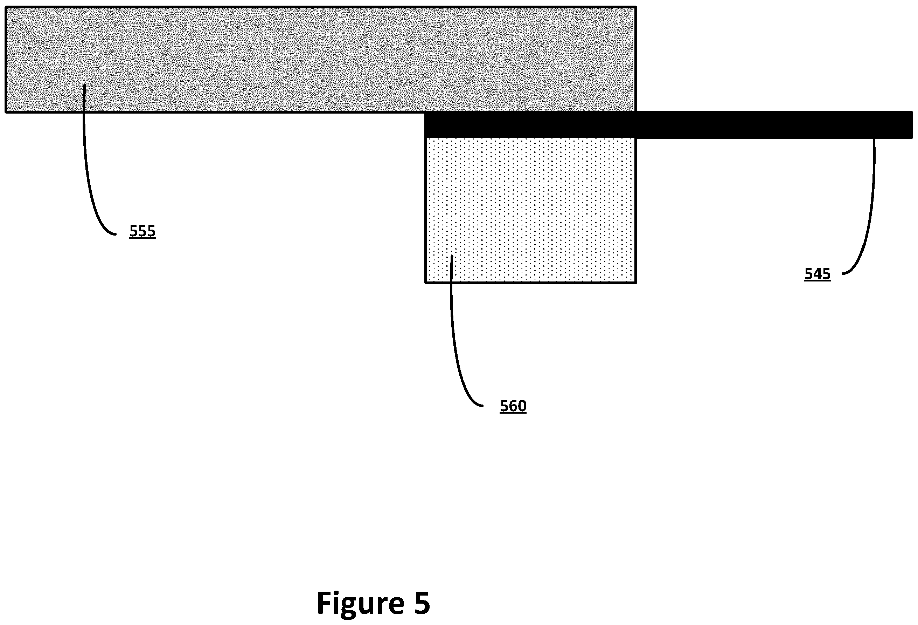

Figure 5 illustrates an example connecting structure used with the embodiments of Figure 4, in accordance with various embodiments. Specifically, Figure 5 illustrates a wire 545 and an FPC 555, which may be respectively similar to wire 445 and FPC 455. As may be shown in Figure 5, the wire 545 is physically coupled with the FPC at a location between the FPC 555 and a stiffener 560. In some embodiments, the stiffener 560 may be a material such as a glass-based stiffening material, a glass-reinforced epoxy laminate material, or some other stiffening material. By coupling the wire 545 between the stiffener 560 and the FPC 555, the resultant connecting joint may be more mechanically or structurally robust.

It will be understood that the embodiments of Figures 4 and 5 are intended as highly simplified example embodiments, and other embodiments may vary in terms of relative proportions, shapes, or numbers of elements.

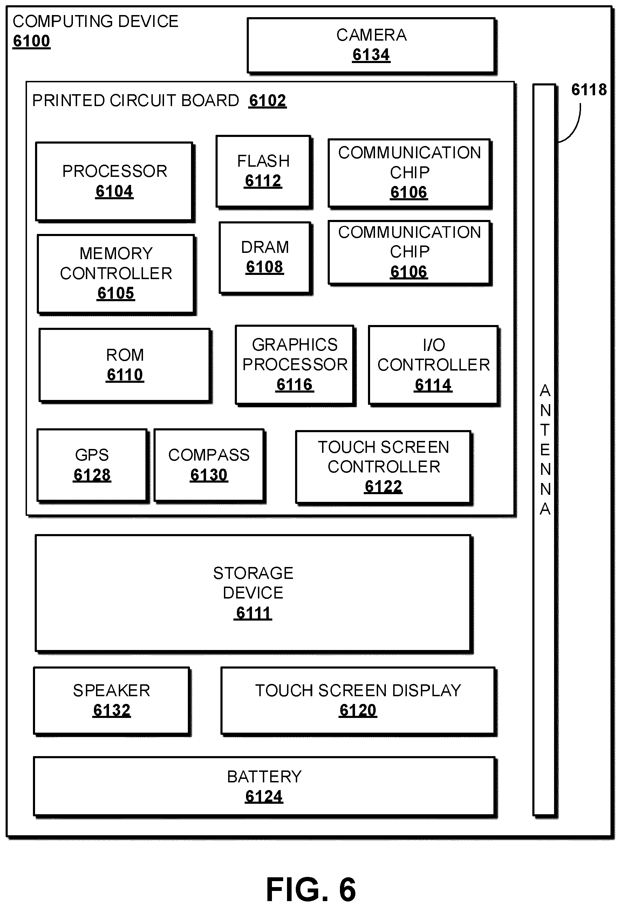

Figure 6 illustrates an example computing device 6100 that may employ the apparatuses and/or methods described herein (e.g., the computing device 6100 may be or include electronic device 100, or include any one or more of the various hinge mechanisms or connectors described herein), in accordance with various embodiments. As shown, computing device 6100 may include a number of components, such as one or more processor(s) 6104 (one shown) and at least one communication chip 6106. In various embodiments, the one or more processor(s) 6104 each may include one or more processor cores. In various embodiments, the at least one communication chip 6106 may be physically and electrically coupled to the one or more processor(s) 6104. In further implementations, the communication chip 6106 may be part of the one or more processor(s) 6104. In various embodiments, computing device 6100 may include printed circuit board (PCB) 6102. For these embodiments, the one or more processor(s) 6104 and communication chip 6106 may be disposed thereon. In alternate embodiments, the various components may be coupled without the employment of PCB 6102.

Depending on its applications, computing device 6100 may include other components that may or may not be physically and electrically coupled to the PCB 6102. These other components include, but are not limited to, memory controller 6105, volatile memory (e.g., dynamic random access memory (DRAM) 6108), non-volatile memory such as read only memory (ROM) 6110, flash memory 6112, storage device 6111 (e.g., a hard-disk drive (HDD)), an I/O controller 6114, a digital signal processor (not shown), a crypto processor (not shown), a graphics processor 6116, one or more antenna 6118, a display (not shown), a touch screen display 6120, a touch screen controller 6122, a battery 6124, an audio codec (not shown), a video codec (not shown), a global positioning system (GPS) device 6128, a compass 6130, an accelerometer (not shown), a gyroscope (not shown), a speaker 6132, a camera 6134, and a mass storage device (such as hard disk drive, a solid state drive, compact disk (CD), digital versatile disk (DVD)) (not shown), and so forth. In various embodiments, the processor 6104 may be integrated on the same die with other components to form a System on Chip (SoC).

In some embodiments, the one or more processor(s) 6104, flash memory 6112, and/or storage device 6111 may include associated firmware (not shown) storing programming instructions configured to enable computing device 6100, in response to execution of the programming instructions by one or more processor(s) 6104, to practice all or selected aspects of the methods described herein. In various embodiments, these aspects may additionally or alternatively be implemented using hardware separate from the one or more processor(s) 6104, flash memory 6112, or storage device 6111.

The communication chips 6106 may enable wired and/or wireless communications for the transfer of data to and from the computing device 6100. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip 6106 may implement any of a number of wireless standards or protocols, including but not limited to IEEE 702.20, Long Term Evolution (LTE), LTE Advanced (LTE-A), 5G, General Packet Radio Service (GPRS), Evolution Data Optimized (Ev-DO), Evolved High Speed Packet Access (HSPA+), Evolved High Speed Downlink Packet Access (HSDPA+), Evolved High Speed Uplink Packet Access (HSUPA+), Global System for Mobile Communications (GSM), Enhanced Data rates for GSM Evolution (EDGE), Code Division Multiple Access (CDMA), Time Division Multiple Access (TDMA), Digital Enhanced Cordless Telecommunications (DECT), Worldwide Interoperability for Microwave Access (WiMAX), Bluetooth, derivatives thereof, as well as any other wireless protocols that are designated as 3G, 4G, 5G, and beyond. The computing device 6100 may include a plurality of communication chips 6106. For instance, a first communication chip 6106 may be dedicated to shorter range wireless communications such as Wi-Fi and Bluetooth, and a second communication chip 6106 may be dedicated to longer range wireless communications such as GPS, EDGE, GPRS, CDMA, WiMAX, LTE, Ev-DO, and others.

In various implementations, the computing device 6100 may be a laptop, a netbook, a notebook, an ultrabook, a smartphone, a computing tablet, a personal digital assistant (PDA), an ultra-mobile PC, a mobile phone, a desktop computer, a server, a printer, a scanner, a monitor, a set-top box, an entertainment control unit (e.g., a gaming console or automotive entertainment unit), a digital camera, an automobile, a medical device, an appliance, a portable music player, a digital video recorder, an electronic sensor, a smart home device, an internet of things (IoT) device, etc. In further implementations, the computing device 6100 may be any other electronic device that processes data.

Although certain embodiments have been illustrated and described herein for purposes of description, this application is intended to cover any adaptations or variations of the embodiments discussed herein. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second, or third) for identified elements are used to distinguish between the elements, and do not indicate or imply a required or limited number of such elements, nor do they indicate a particular position or order of such elements unless otherwise specifically stated.

## Claims

1. An electronic device (100) comprising:
a first panel (105a) with first one or more components (115) thereon;
a second panel (105b) with second one or more components thereon;
a first wire (245) that communicatively couples the first one or more components (115) and the second one or more components; and
a hinge mechanism (210) that couples the first panel (105a) with the second panel (105b), wherein the first wire (245) passes through the hinge mechanism (210) and the hinge mechanism (250) includes a first tensioning mechanism to provide tension to the first wire (245) when the electronic device (100) is in an open position and a closed position; and
**characterized in that**:
the first panel (105a) comprises a first flexible printed circuit, FPC, that is physically and communicatively coupled with the first one or more components (115); and
the second panel (105b) comprises a second flexible printed circuit, FPC, that is physically and communicatively coupled with the second one or more components,
wherein the first wire (245) is physically coupled between the first FPC and the second FPC; and
wherein the first wire (245) is physically coupled with the first FPC such that the first wire (245) is between the first FPC (555) and a stiffener (560) of the first FPC.

2. The electronic device (100) of claim 1, wherein the first tensioning mechanism (250) includes at least a first spring-loaded tensioner.

3. The electronic device (100) of claim 1, wherein the first tensioning mechanism (250) includes at least a first elastic spring.

4. The electronic device (100) of any preceding claim, further comprising a second wire that communicatively couples the first one or more components (115) and the second one or more components, wherein the second wire passes through the hinge mechanism (210); or
optionally, wherein the first tensioning mechanism (250) is further to provide tension to the second wire; or
optionally, wherein the hinge mechanism (210) includes a second tensioning mechanism to provide tension to the second wire when the electronic device is in an open position and a closed position.

5. The electronic device (100) of any preceding claim,
wherein the stiffener (560) is glass-based or glass-reinforced.

6. The electronic device (100) of any preceding claim, wherein the first one or more components (115) include a first display element of a foldable organic light-emitting diode, FOLED display, and the second one or more components include a second display element of the FOLED display.

7. The electronic device (100) of any preceding claim, wherein the first one or more components (115) include a battery, a circuit board, a processor, or an antenna.

8. The electronic device (100) of any preceding claim, wherein the first wire (245) is a coaxial wire.

9. The electronic device (100) of claim 1, wherein:
the first panel (105a) comprises a first portion of a foldable organic light-emitting diode, FOLED display;
the second panel (105b) comprises a second portion of the FOLED display;
the wire communicatively couples the first portion of the FOLED display with the second portion of the FOLED display; and
wherein the first tensioning mechanism (250) is configured to provide tension on the first wire (245) in a first direction; and wherein the hinge mechanism (210) further comprises a second tensioning mechanism configured to provide tension on the first wire (245) in a second direction opposite the first direction;
wherein the first tensioning mechanism (250) and the second tensioning mechanism are configured to provide tension to the first wire (245) when the first panel (105a) and the second panel (105b) are in an open position and a close position.

10. The electronic device (100) of claim 9, wherein the first tensioning mechanism (250) includes a spring-loaded tensioner or an elastic spring.

## Patentansprüche

1. Elektronische Vorrichtung (100), die Folgendes umfasst:
eine erste Platte (105a) mit einer oder mehreren ersten Komponenten (115) darauf;
eine zweite Platte (105b) mit einer oder mehreren zweiten Komponenten darauf;
einen ersten Draht (245), der die eine oder mehreren ersten Komponenten (115) und die eine oder mehreren zweiten Komponenten kommunikativ koppelt; und
einen Scharniermechanismus (210), der die erste Platte (105a) mit der zweiten Platte (105b) koppelt, wobei der erste Draht (245) durch den Scharniermechanismus (210) verläuft und der Scharniermechanismus (250) einen ersten Spannmechanismus zum Versehen des ersten Drahts (245) mit Spannung, wenn sich die elektronische Vorrichtung (100) in einer geöffneten Position und einer geschlossenen Position befindet, aufweist; und
**dadurch gekennzeichnet, dass**:
die erste Platte (105a) eine erste flexible gedruckte Schaltung, FPC, umfasst, die physisch und kommunikativ mit der einen oder den mehreren ersten Komponenten (115) gekoppelt ist; und
die zweite Platte (105b) eine zweite flexible gedruckte Schaltung, FPC, umfasst, die physisch und kommunikativ mit der einen oder den mehreren zweiten Komponenten gekoppelt ist, wobei der erste Draht (245) physisch zwischen der ersten FPC und der zweiten FPC gekoppelt ist; und
wobei der erste Draht (245) physisch so mit der ersten FPC gekoppelt ist, dass sich der erste Draht (245) zwischen der ersten FPC (555) und einer Versteifung (560) der ersten FPC befindet.

2. Elektronische Vorrichtung (100) nach Anspruch 1, wobei der erste Spannmechanismus (250) mindestens eine erste federbelastete Spannvorrichtung aufweist.

3. Elektronische Vorrichtung (100) nach Anspruch 1, wobei der erste Spannmechanismus (250) mindestens eine erste elastische Feder aufweist.

4. Elektronische Vorrichtung (100) nach einem der vorhergehenden Ansprüche, die ferner einen zweiten Draht umfasst, der die eine oder die mehreren ersten Komponenten (115) und die eine oder die mehreren zweiten Komponenten kommunikativ koppelt, wobei der zweite Draht durch den Scharniermechanismus (210) verläuft; oder
optional wobei der erste Spannmechanismus (250) ferner dazu dient, den zweiten Draht mit Spannung zu versehen; oder
optional wobei der Scharniermechanismus (210) einen zweiten Spannmechanismus aufweist, um den zweiten Draht mit Spannung zu versehen, wenn sich die elektronische Vorrichtung in einer geöffneten Position und einer geschlossenen Position befindet.

5. Elektronische Vorrichtung (100) nach einem der vorhergehenden Ansprüche,
wobei die Versteifung (560) glasbasiert oder glasverstärkt ist.

6. Elektronische Vorrichtung (100) nach einem der vorhergehenden Ansprüche, wobei die eine oder die mehreren ersten Komponenten (115) ein erstes Anzeigeelement einer faltbaren organischen Leuchtdioden- , FOLED-Anzeige, aufweisen und die eine oder die mehreren zweiten Komponenten ein zweites Anzeigeelement der FOLED-Anzeige aufweisen.

7. Elektronische Vorrichtung (100) nach einem der vorhergehenden Ansprüche, wobei die eine oder die mehreren ersten Komponenten (115) eine Batterie, eine Schaltungsplatine, einen Prozessor oder eine Antenne aufweisen.

8. Elektronische Vorrichtung (100) nach einem der vorhergehenden Ansprüche, wobei der erste Draht (245) ein Koaxialdraht ist.

9. Elektronische Vorrichtung (100) nach Anspruch 1, wobei:
die erste Platte (105a) einen ersten Teil einer faltbaren organischen Leuchtdioden-, FOLED-Anzeige umfasst;
die zweite Platte (105b) einen zweiten Teil der FOLED-Anzeige umfasst;
der Draht den ersten Teil der FOLED-Anzeige kommunikativ mit dem zweiten Teil der FOLED-Anzeige koppelt; und
wobei der erste Spannmechanismus (250) dazu ausgelegt ist, den ersten Draht (245) in einer ersten Richtung mit Spannung zu versehen; und wobei der Scharniermechanismus (210) ferner einen zweiten Spannmechanismus umfasst, der dazu ausgelegt ist, den ersten Draht (245) in einer zweiten Richtung entgegengesetzt zur ersten Richtung mit Spannung zu versehen;
wobei der erste Spannmechanismus (250) und der zweite Spannmechanismus dazu ausgelegt sind, den ersten Draht (245) mit Spannung zu versehen, wenn sich die erste Platte (105a) und die zweite Platte (105b) in einer geöffneten Position und einer geschlossenen Position befinden.

10. Elektronische Vorrichtung (100) nach Anspruch 9, wobei der erste Spannmechanismus (250) eine federbelastete Spannvorrichtung oder eine elastische Feder aufweist.

## Revendications

1. Dispositif électronique (100), comprenant :
un premier panneau (105a) sur lequel sont placés un ou plusieurs premiers composants (115) ;
un deuxième panneau (105b) sur lequel sont placés un ou plusieurs deuxièmes composants ;
un premier fil (245) qui couple en communication les un ou plusieurs premiers composants (115) et les un ou plusieurs deuxièmes composants ; et
un mécanisme de charnière (210) qui couple le premier panneau (105a) au deuxième panneau (105b), le premier fil (245) passant à travers le mécanisme de charnière (210) et le mécanisme de charnière (250) comportant un premier mécanisme tendeur pour mettre en tension le premier fil (245) lorsque le dispositif électronique (100) est en position ouverte et en position fermée ; et
**caractérisé en ce que** :
le premier panneau (105a) comprend un premier circuit imprimé souple, noté FPC, qui est couplé physiquement et en communication aux un ou plusieurs premiers composants (115) ; et
le deuxième panneau (105b) comprend un deuxième circuit imprimé souple, noté FPC, qui est couplé physiquement et en communication aux un ou plusieurs deuxièmes composants, le premier fil (245) étant couplé physiquement entre le premier FPC et le deuxième FPC ; et
le premier fil (245) étant couplé physiquement au premier FPC de sorte que le premier fil (245) se situe entre le premier FPC (555) et un raidisseur (560) du premier FPC.

2. Dispositif électronique (100) selon la revendication 1, le premier mécanisme tendeur (250) comportant au moins un premier tendeur à ressort.

3. Dispositif électronique (100) selon la revendication 1, le premier mécanisme tendeur (250) comportant au moins un premier ressort élastique.

4. Dispositif électronique (100) selon l'une quelconque des revendications précédentes, comprenant en outre un deuxième fil qui couple en communication les un ou plusieurs premiers composants (115) et les un ou plusieurs deuxièmes composants, le deuxième fil passant à travers le mécanisme de charnière (210) ; ou
facultativement, le premier mécanisme tendeur (250) servant en outre à mettre en tension le deuxième fil ; ou
facultativement, le mécanisme de charnière (210) comportant un deuxième mécanisme tendeur pour mettre en tension le deuxième fil lorsque le dispositif électronique est en position ouverte et en position fermée.

5. Dispositif électronique (100) selon l'une quelconque des revendications précédentes,
le raidisseur (560) étant à base de verre ou renforcé de verre.

6. Dispositif électronique (100) selon l'une quelconque des revendications précédentes, les un ou plusieurs premiers composants (115) comportant un premier élément d'affichage d'un affichage à diodes électroluminescentes organiques pliables, notées FOLED, et les un ou plusieurs deuxièmes composants comportant un deuxième élément d'affichage de l'affichage FOLED.

7. Dispositif électronique (100) selon l'une quelconque des revendications précédentes, les un ou plusieurs premiers composants (115) comportant une batterie, une carte à circuits, un processeur, ou une antenne.

8. Dispositif électronique (100) selon l'une quelconque des revendications précédentes, le premier fil (245) étant un fil coaxial.

9. Dispositif électronique (100) selon la revendication 1,
le premier panneau (105a) comprenant une première partie d'un affichage à diodes électroluminescentes organiques pliables, notées FOLED ;
le deuxième panneau (105b) comprenant une deuxième partie de l'affichage FOLED ;
le fil couplant en communication la première partie de l'affichage FOLED à la deuxième partie de l'affichage FOLED ; et
le premier mécanisme tendeur (250) étant configuré pour mettre en tension le premier fil (245) dans une première direction ; et le mécanisme de charnière (210) comprenant en outre un deuxième mécanisme tendeur configuré pour mettre en tension le premier fil (245) dans une deuxième direction opposée à la première direction ;
le premier mécanisme tendeur (250) et le deuxième mécanisme tendeur étant configurés pour mettre en tension le premier fil (245) lorsque le premier panneau (105a) et le deuxième panneau (105b) sont en position ouverte et en position fermée.

10. Dispositif électronique (100) selon la revendication 9, le premier mécanisme tendeur (250) comportant un tendeur à ressort ou un ressort élastique.
